# EUROPÄISCHE PATENTSCHRIFT

(11) **EP 3 215 327 B1**
(45) Veröffentlichungstag und Bekanntmachung des Hinweises auf die Patenterteilung: **01.07.2020**
(21) Anmeldenummer: 15726020.9
(22) Anmeldetag: 13.05.2015
(51) Int. Cl.: B27N 3/06, B27N 7/00

(54) **HOLZWERKSTOFFPLATTE, INSBESONDERE IN FORM EINES HOLZ-KUNSTSTOFF-VERBUNDWERKSTOFFES, UND EIN VERFAHREN ZU DEREN HERSTELLUNG**
METHOD FOR MANUFACTURING A WOODEN PANEL, IN PARTICULAR A WOOD-PLASTIC COMPOSITE
PROCÉDÉ DE FABRICATION D'UNE PLAQUE EN MATÉRIAU DÉRIVÉ DU BOIS, NOTAMMENT UN COMPOSITE CONSTITUÉ DE BOIS/PLASTIQUE

(30) Priorität: 06.11.2014 EP 14191988; 18.12.2014 EP 14198757; 29.01.2015 EP 15153005
(43) Veröffentlichungstag der Anmeldung: 13.09.2017
(73) Patentinhaber: Flooring Technologies Ltd., Kalkara SCM 1001 (MT)
(72) Erfinder: KALWA, Norbert, 32805 Horn-Bad Meinberg (DE); SIEMS, Jens, 17139 Malchin (DE); LEHNHOFF, Ingo, 18347 Dierhagen (DE)
(74) Vertreter: Maikowski & Ninnemann Patentanwälte Partnerschaft mbB
(86) Internationale Anmeldenummer: PCT/EP2015/060622
(87) Internationale Veröffentlichungsnummer: WO 2016/071007

(56) Entgegenhaltungen:
- EP-A1- 2 537 653
- EP-A1- 2 762 328
- DE-A1-102011 121 865
- JP-A- 2010 280 186
- US-A- 4 430 375
- US-A- 4 734 236
- US-A- 5 187 000
- US-A1- 2004 028 958
- US-A1- 2005 238 865
- US-A1- 2007 042 664
- US-A1- 2010 300 030
- US-A1- 2011 089 611

## Beschreibung

Die vorliegende Erfindung betrifft eine Holzwerkstoffplatte nach einem der Ansprüche 1, 4, 7, eine Verwendung einer solchen Holzwerkstoffplatte nach Anspruch 14 und ein Verfahren zur Herstellung einer solchen Holzwerkstoffplatte nach Anspruch 15.

### Beschreibung

Bei einer Vielzahl von Bodenbelägen ist in der Nutzung ein grundsätzliches Problem die durch Feuchtigkeit und/oder Wasser hervorgerufenen Materialschäden, wobei zu Materialschäden nicht nur die Materialzerstörung sondern auch die Verschlechterung der Produkteigenschaften oder das Auftreten von Gerüchen gezählt werden muss. Während bei textilen Bodenbelägen eben durch diese Beanspruchung das Auftreten von Wasserrändern, Gerüchen oder im schlimmsten von Fall von Schimmel beobachtbar ist, sind bei lackierten Produkten meist Oberflächenbeeinträchtigungen, wie Mattierungen, feststellbar.

Neben textilen Bodenbelägen ist die Verwendung von Holzwerkstoffplatten, z.B. in Form von Holzfaserplatten in unterschiedlichen Ausgestaltungen zur Verwendung als Fußbodenlaminat oder zur Verkleidung von Wänden oder auch bei der Herstellung von Möbeln seit langem bekannt. So werden beispielsweise Holzfaserplatten in Form von mitteldichten Holzfaserplatten (MDF-Platten), hochdichten Holzfaserplatten (HDF-Platten), Spanplatten oder OSB-Platten (oriented strand board) verwendet, welche durch Verpressen entsprechender Holzfasern oder Späne mit einem duroplastischen Kunststoffharz als Bindemittel gewonnen werden.

Ein besonderes Problem bei der Verwendung der genannten Holzfaserplatten besteht in der Empfindlichkeit der eingesetzten Holzfasern oder Holzspäne gegenüber hohen Luftfeuchten und direktem Wasserkontakt. Während dieses Problem bei Möbeln oder Produkten für den Innenausbau durch konstruktive oder technologische Maßnahmen relativ leicht beherrscht werden kann, ist dies bei Bodenbelägen z.B. Laminatböden auf der Basis von Holz oder Holzwerkstoffen häufig deutlich problematischer.

Bodenbeläge auf der Basis von Holz oder Holzwerkstoffplatten wie Laminatböden oder Fertigparkett reagieren auf Wasserkontakt schnell mit Quellungen und/oder Dimensionsänderungen, die sich von leichten Kantenquellungen bis hin zu Gefügezerstörungen entwickeln können. Dies wird u.a. durch Einwirkungen von Pflegemitteln auf Wasserbasis hervorgerufen, welche teilweise sehr häufig und sehr intensiv verwendet werden. Auch können hohe Luftfeuchten vergleichbare Prozesse auslösen. Darüber hinaus steht der Bodenbelag typischerweise auch in einem direkten Kontakt mit den Gebäudeteilen wie z.B. Betondecken/Estrich oder Wänden, die ebenfalls Feuchtigkeit in dem Bodenbelag transportieren können. Aus diesem Grund wird bei der Herstellung der oben genannten Holzwerkstoffprodukte auf quellarme Hölzer oder Holzwerkstoffe zurückgegriffen, was zwar die beschriebenen Probleme mindern, aber nicht gänzlich beheben kann. Teilweise kommen auch anorganische Trägerplatten zur Herstellung von Produkten mit Holzoberflächen zum Einsatz, wobei es hier zu Verklebungs-, Bearbeitungs- oder Verlegeproblemen kommen kann.

Die Feuchteschäden sind umso gravierender, je stärker das Holz oder der Holzwerkstoff bei der Herstellung des Produktes verdichtet worden ist. Dadurch wird bei der Beaufschlagung mit Wasser der Quelldruck stark erhöht. Daraus erklärt sich zum Beispiel die deutliche Reaktion von Laminatböden oder lackierten Holzwerkstoffen auf direkte Wasserbeaufschlagung. Eine Vielzahl von Maßnahmen (quellvergütete Platten, Kantenversiegelung usw.) hat zwar bezüglich der Empfindlichkeit gegenüber Wasser/Feuchtigkeit zu Verbesserungen geführt, konnte die Probleme nicht vollständig lösen.

Als Alternative zur Verwendung von Laminatböden mit dem genannten Quellungsproblem wurden in der Vergangenheit zunehmend Bodenbeläge auf Basis von Polyvinylchlorid (PVC) eingesetzt, die eine sehr niedrige bis gar keine Quellung besitzen. Nachteilig bei der Verwendung von PVC-Fußböden ist allerdings deren hohe Kratzanfälligkeit und Kriechneigung, was insbesondere in hochfrequentierten Bereichen (wie z.B. Verkaufsbereichen) zu einer schnellen Abnutzung und Unansehnlichkeit des Fußbodenbelages führt.

Aus diesen Gründen hat man in der Vergangenheit häufig sogenannte wood-plasticcomposites (WPC) als Trägermaterialien für Holzprodukte verwendet. Diese Trägermaterialien besitzen eine sehr geringe Quellung von weniger als 3% und eine hohe Dimensionsstabilität.

WPCs sind thermoplastisch verarbeitbare Verbundwerkstoffe auf der Basis von Holzmehl oder Holzspänen und thermoplastischen Kunststoffen, welchen ggf. noch weitere Additive zugesetzt werden können. Die Gemische aus Holzfasern und Thermoplasten werden aufgeschmolzen und zu Agglomeraten verarbeitet. Im weiteren Herstellungsprozess werden die Agglomerate in Extrudern aufgeschmolzen und zu relativ kleinformatigen Platten verarbeitet. Die Breite der Platten liegt hierbei meist in einem Bereich von weniger als einem Meter bedingt durch den Herstellungsprozess in einem Extruder. Auch liegt die Produktivität pro Stunde in einem niedrigen einstelligen Quadratmeterbereich, so dass die Kombination aus niedriger Produktivität und begrenzter Plattengröße relativ hohe Kosten der so hergestellten WPC-Platten begründet.

Auch die Tatsache, dass die Holzkomponente auf eine Feuchte auf unter 5 Gew%, besser sogar auf unter 1 Gew% getrocknet werden muss, sorgt ebenfalls nicht für niedrige Kosten. Höhere Feuchten führen zu Wasserdampfbildung im Prozess und damit zu Blasenbildung im Produkt. Ein weiterer gravierender Nachteil ist, dass das eingesetzte Holz frei von Sand bzw. Mineralien sein muss. Derartige Störstoffe würden sonst das Extrusionswerkzeug zerstören.

Entsprechend ergeben sich hieraus die Nachteile einer niedrigen Produktivität, begrenzten Plattengröße und einem somit teurem Verfahren.

JP2010280186 beschreibt ein Herstellungsverfahren für eine Faserplatte mit folgenden Schritten: Herstellen einer Fasermatte durch Vermischen einer Pflanzenfaser und einer thermoplastischen Harzfaser, die ein säuremodifiziertes thermoplastischen Harz (modifiziert mit einer Anhydrid- oder Carboxyl-Gruppe) enthält; Aufsprühen einer wässrigen Dispersion eines thermoplastischen Harzes auf beide Seiten der Fasermatte; und Wärmeverpressen der Fasermatte.

Der vorliegenden Erfindung liegt daher die technische Aufgabe zugrunde, die beschriebenen Nachteile zu beheben und Holzwerkstoffplatten mit einer geringen Quellung von z.B. weniger als 3% in variableren und größeren Formaten und mit einer höheren Produktivität zur Verfügung zu stellen. Diese Holzwerkstoffplatten sollen anschließend als Trägerplatten u.a. zur Herstellung von Produkten für Anwendungen mit erhöhtem Feuchtaufkommen verwendet werden.

Diese Aufgabe wird mit einer Holzwerkstoffplatte nach einem der Ansprüche 1, 4, 7 und einem Verfahren zur Herstellung dieser Holzwerkstoffplatte nach Anspruch 15 gelöst.

Es wird eine Holzwerkstoffplatte nach einem der Ansprüche 1, 4, 7 aus einem Holz-Kunststoff-Verbundwerkstoff, bereitgestellt, welche Holzfaser und Kunststofffaser aus mindestens einen Kunststoff, umfasst, wobei der mindestens eine Kunststoff mit mindestens einer organischen Verbindung funktionalisiert ist. Die mindestens eine organische Verbindung weist bevorzugt mindestens eine funktionelle Gruppe auf, die insbesondere zur Ausbildung einer Bindung mit den OH-Gruppen der Holzfasern fähig ist.

Die vorliegende Holzwerkstoffplatte weist zudem mindestens eine Dekorschicht auf, die auf mindestens einer Seite, bevorzugt der Oberseite der Platte, aufgetragen ist.

Die Holzwerkstoffplatte wird in einem Verfahren gemäß Anspruch 15 Hergestellt.

Die vorliegende Holzwerkstoffplatte wird in einem mehrstufigen Prozess, insbesondere in einem dreistufigen Prozess hergestellt, in welchem zunächst aus einem Gemisch von Holzpartikeln in Form von Holzfasern und funktionalisierten Kunststoffen in Form von Kunststofffasern, insbesondere thermoplastischen Kunststoffen, ein vorverdichtetes Vlies bzw. eine Dämpfstoffmatte mit einer niedrigen Rohdichte hergestellt wird. Dieses Vlies bzw. Dämpfstoffmatte mit einer niedrigen Rohdichte wird anschließend zunächst auf einer Doppelbandpresse unter hohem Druck und hoher Temperatur verdichtet und anschließend in einer Kühlpresse abgekühlt. Das vorliegende Verfahren ermöglicht die Herstellung von Holzwerkstoffplatten in Form von Holz-Kunststoff-Verbundwerkstoffen bzw. -Composites (WPCs) in großen Formaten, die als Trägerplatten zur Produktion von Bodenbelägen dienen, verbunden mit einer hohen Produktivität und somit niedrigeren Kosten.

In einer Ausführungsform wird ein thermoplastischer Kunststoff, insbesondere in Form von Granulaten, Pulver oder Kunststofffasern in dem Holzpartikel-Kunststoff-Gemisch verwendet.

Der thermoplastische Kunststoff ist bevorzugter Weise ausgewählt aus einer Gruppe enthaltend Polyethylen (PE), Polypropylen (PP), Polyester, Polyethylenterephthalat (PET), Polyamid (PA), Polystyrol (PS), Acrylnitril-Butadien-Styrol (ABS), Polymethylmethacrylat (PMMA), Polycarbonat (PC), Polyetheretherketon (PEEK), Polyisobutylen (PIB), Polybutylen (PB), Mischungen oder Copolymerisate davon. Insbesondere ist es bevorzugt, wenn als thermoplastischer Kunststoff PE, PP oder eine Mischung davon eingesetzt wird.

Wie oben erwähnt, kann der thermoplastische Kunststoff in Form von Kunststofffasern eingesetzt werden. Die Kunststofffasern können dabei als Monokomponentenfasern oder als Bikomponentenfasern vorliegen. Die thermisch aktivierbaren Kunststoff- bzw. Bindefasern führen in der Matrix aus Holzfasern bzw. Holzpartikel sowohl eine Binde- als auch eine Stützfunktion aus. Werden Monokomponentenfasern verwendet, bestehen diese bevorzugt aus Polyethylen oder anderen thermoplastischen Kunststoffen mit niedrigem Schmelzpunkt.

Bikomponentenfasern (auch als Biko-Stützfasern bezeichnet) werden besonders bevorzugt eingesetzt. Biko-Fasern erhöhen die Steifigkeit von Holzfaserplatten und verringern auch die bei thermoplastischen Kunststoffen (wie z.B. bei PVC) anzutreffende Kriechneigung.

Die Biko-Fasern bestehen typischerweise aus einem Tragfilament oder auch einer Kernfaser aus einem Kunststoff mit höherer Temperaturbeständigkeit, insbesondere Polyester oder Polypropylen, die von einem Kunststoff mit einem niedrigeren Schmelzpunkt, insbesondere aus Polyethylen, umhüllt bzw. ummantelt sind. Die Hülle bzw. der Mantel der Biko-Fasern ermöglicht nach Aufschmelzen bzw. Anschmelzen eine Vernetzung der Holzpartikel miteinander. Vorliegend werden insbesondere als Bikomponentenfasern solche auf der Basis von Thermoplasten wie PP/PE, Polyester/PE oder Polyester/Polyester verwendet.

Es ist ebenfalls vorstellbar, dass der Kunststoffanteil selbst auch ein Gemisch von verschiedenen Kunststoffen ist. So kann ein Kunststoffgemisch aus 20 Gew.% BiKomponentenfasern : 80 Gew% PE-Fasern bis zu 80 Gew.% Bikomponentenfasern : 20 Gew% PE-Fasern bestehen. Generell sind auch andere Zusammensetzungen möglich. Durch die Veränderung der Zusammensetzung der Kunststoffkomponente kann die zur Verdichtung des Vorvlieses bzw. Vlieses benötigte Temperatur verändert und angepasst werden.

Wie oben angeführt, wird vorliegend mindestens ein Kunststoff verwendet, der mit mindestens einer organischen Verbindung funktionalisiert ist. Die organische Verbindung z.B. in Form eines Monomers, ist wiederum bevorzugt mit mindestens einer funktionellen Gruppe versehen, wobei die funktionelle Gruppe in der Lage ist, mindestens eine Bindung, insbesondere eine chemische Bindung, mit den OH-Gruppen der Zellulose der Holzpartikel einzugehen. Damit entsteht eine chemische Bindung zwischen dem Kunststoff, insbesondere den Kunststofffasern, und den Holzfasern, wodurch eine Trennung zwischen den beiden Fasertypen bei Wasserbeaufschlagung vermieden wird.

Bei der Verbindung handelt es sich um eine organische Verbindung, deren mindestens eine funktionelle Gruppe ausgewählt aus einer Gruppe enthaltend -CO₂H, - CONH2, -COO-, insbesondere Maleinsäure, Phthalsäure, Bernsteinsäure, Glutarsäure, Adipinsäure oder deren Anhydride, oder Succinimid.

Die monomere organische Verbindung wie z.B. Maleinsäureanhydrid (MSA) wird auf das unpolare Basispolymer wie z.B. Polypropylen oder Polyethylen in einem Grafting-Verfahren aufgepfropft. Hierbei ist es auch möglich, dass die organische Verbindung mehr als ein Monomer umfasst, z.B. in Form eines Dimers oder Trimers, wobei z.B. jeweils zwei funktionalisierte organische Moleküle oder Verbindungen über ein Brückenmolekül z.B. in Form ein nicht-funktionalisiertes Molekül miteinander verbunden sind. Besonders bevorzugt ist in diesem Zusammenhang ein Trimer aus MSA-Styren-MSA.

Der Pfropfgrad des verwendeten Kunststoffs kann zwischen 0,1 und 5 Gew% an monomerer organischer Verbindung, bevorzugt zwischen 0,5 und 3 Gew%, insbesondere bevorzugt zwischen 1 und 2 Gew% betragen.

Ganz besonders bevorzugt werden eine Mischung aus Polypropylen und Polyethylen, insbesondere in Form von Bikomponenten-Fasern bestehend aus einem Polypropylen-Kern und einer Polyethylen-Hülle verwendet, wobei die unpolaren Basispolymere jeweils mit Maleinsäureanhydrid funktionalisiert sind. Auch können die Bikomponenten-Fasern aus Polyethylenterephthalat/ Polyethylenterephthalat-Co-iso-phthalat mit ggf. aufgepfropftem MSA bestehen.

Es ist auch möglich eine Mischung aus einem Anteil an nicht-modifizierten Bikomponentenfasern (d.h. ohne aufgepfropfter organischer Verbindung) und einem Anteil an mit einer organischen Verbindung funktionalisierten Kunststoff (d.h. mit aufgepfropfter organischer Verbindung) zu verwenden. So ist es denkbar, eine Mischung aus einem Anteil an Polyethylenterephthalat/ Polyethylenterephthalat-Co-iso-phthalat-Fasern und mit Maleinsäueranhydrid gegrafteten Polyethylen (z.B. in Form von LLDPE-Fasern) zu verwenden.

Erfindungsgemäß wird ein Holzfaser-Kunststofffaser-Gemisch verwendet, welches ein Mischungsverhältnis von Holzfasern zu Kunststofffasern (modifiziert und nicht-modifiziert) 70 Gew% Holzfaser: 30 Gew% Kunststofffaser und 40 Gew% Holzfaser: 60 Gew% Kunststofffaser umfasst. Das verwendete Holzpartikel-Kunststoffgemisch kann beispielhaft 44 Gew% Holzfasern bzw. Holzpartikel und 56 Gew% Biko-Fasern, z.B. Polyethylenterephthalat/ Polyethylenterephthalat-Co-Isophthalat-Fasern oder PP/PE-Fasern aufweisen. Ein Mischungsverhältnis von Holzfasern und Kunststofffasern von 50 Gew% zu 50 Gew% ist ganz besonders bevorzugt.

Unter den vorliegend verwendeten Holzpartikeln sind lignocellulosehaltige Zerkleinerungsprodukte in Form von Holzfasern zu verstehen. Im Falle der Verwendung von Holzfasern gemäß der Erfindung kommen Holzfasern, insbesondere trockene Holzfasern, mit einer Länge von 1,0 mm bis 10 mm und einer Dicke von 0,05 mm bis 1 mm zum Einsatz. Die Holzfaserfeuchte der verwendeten Fasern liegt dabei in einem Bereich zwischen 6 und 15% bezogen auf das Gesamtgewicht der Holzfasern.

Es ist ebenfalls, nicht gemäß der Erfindung, möglich, die verwendeten Holzpartikel in Bezug auf den mittleren Korndurchmesser zu bestimmen, wobei der mittlere Korndurchmesser d50 zwischen 0,05 mm und 1 mm, bevorzugt 0,1 und 0,8 mm betragen kann.

Entsprechend der gewünschten Zusammensetzung des Holzpartikel-Kunststoff-Gemisches werden die einzelnen Komponenten (Holzpartikel und Kunststoff) in einem Mischer innig vermischt. Das Vermischen der Komponenten kann z.B. durch Eingeben in eine Blasleitung erfolgen. Hier erfolgt auf dem Weg von der Zugabe der Komponenten bis zum Vorratsbehälter eine intensive Vermischung durch die eingeblasene Luft als Transportmittel. Die intensive Vermischung der Komponenten wird im Vorratsbehälter durch die eingeblasene Transportluft noch fortgesetzt.

Aus dem Vorratsbehälter wird das Holzpartikel-Kunststoff-Gemisch, z.B. nach Abwiegen auf einer Flächenwaage, auf ein erstes Transportband über seine Breite gleichmäßig aufgeblasen. Die Menge an zugeführten Holzpartikel-Kunststoff-Gemisch richtet sich nach der gewünschten Schichtdicke und der gewünschten Rohdichte des herzustellenden Vorvlieses. Typische Flächengewichte des gestreuten Vorvlieses können dabei in einem Bereich zwischen 3.000 und 10.000 g/m², bevorzugt zwischen 5.000 bis 7.000 g/m², liegen. Wie bereits erwähnt wird die Breite des gestreuten Vorvlieses durch die Breite des ersten Transportbandes bestimmt, und kann z.B. in einem Bereich bis zu 3.000 mm, bevorzugt 2.800 mm, insbesondere bevorzugt bis zu 2.500 mm liegen.

Nach dem Aufbringen des Holzpartikel-Kunststoff-Gemisches auf ein erstes Transportband unter Ausbildung eines Vorvlieses wird das Vorvlies in mindestens einem ersten Temperofen zum Vorverdichten eingeführt. In einer besonders bevorzugten Ausführungsform des Verfahrens wird das Vorvlies aus Holzpartikeln und Kunststoff in dem mindestens einen Temperofen auf eine Temperatur erhitzt, die der Schmelztemperatur des verwendeten Kunststoffes entspricht oder darüber liegt.

Die Temperaturen im Temperofen können zwischen 150 und 250°C, bevorzugt 160 und 230°C, insbesondere bevorzugt 160 und 200°C liegen. Die Kerntemperatur des Vorvlieses liegt bevorzugt in einem Bereich zwischen 100 und 150°C, insbesondere bevorzugt bei ca. 130°C. Während des Erhitzens im Temperofen erfolgt ein Anschmelzen des Kunststoffmaterials, wodurch eine innige Verbindung zwischen dem Kunststoffmaterial wie z.B. den Kunststofffasern mit den Holzfasern hervorgerufen wird und gleichzeitig eine Verdichtung des Vorvlieses erfolgt. Dabei gilt, je höher die Kerntemperatur des Vorvlieses desto schneller kann die Presse gefahren werden, da der Verdichtungsprozess beschleunigt wird.

Die Temperaturen im Temperofen werden beispielsweise durch eingeblasene Heißluft erhalten.

In einer weiteren Ausführungsform des vorliegenden Verfahrens weist das vorverdichtete Vorvlies nach Austritt aus dem Temperofen eine Rohdichte (bzw. ein Raumgewicht) zwischen 40 und 200 kg/m³, bevorzugt 60 und 150 kg/m³, insbesondere bevorzugt zwischen 80 und 120 kg/m³ auf. Die Dicke des vorverdichteten Vorvlies kann dabei zwischen 20 und 100 mm, bevorzugt 30 und 50 mm, insbesondere bevorzugt 35 und 45 mm liegen.

Es ist insbesondere bevorzugt, wenn der Vorschub des Förderbandes bzw. Transportbandes im Temperofen in einem Bereich zwischen 5 und 15 m/min, bevorzugt zwischen 6 und 12 m/min liegt.

Nach dem Verlassen des Temperofens kann das vorverdichtete Vorvlies abgekühlt und konfektioniert werden. Typische Konfektionierungsmaßnahmen sind z.B. die Besäumung des Vorvlieses. Der dabei anfallende Abfall, insbesondere die anfallenden Randstreifen, können zerkleinert werden und in den Verfahrensprozess zurückgeführt werden. Da das gewünschte Mischungsverhältnis gegeben ist, kann das Material direkt in den Vorratsbehälter eingespeist werden.

In einer weiteren Variante des vorliegenden Verfahrens wird das vorverdichtete Vorvlies in der mindestens einen Doppelbandpresse auf eine Dicke zwischen 2 und 20 mm, bevorzugt 3 und 15 mm, insbesondere bevorzugt 4 und 10 mm verdichtet.

Die während des Verdichtens des Vorvlieses in der mindestens einen Doppelbandpresse angelegte Temperatur liegt zwischen 150 und 250°C, bevorzugt 180 und 230°C, bevorzugt 200 und 220 °C. Der in der mindestens einen Doppelbandpresse angewendete Druck kann zwischen 2 MPa und 10 MPa, bevorzugt 3 MPa und 8 MPa, insbesondere bevorzugt 5 und 7 MPa liegen. Der Vorschub der Doppelbandpresse beträgt zwischen 4 und 15 m/min, bevorzugt zwischen 6 und 12 m/min.

Nach Verlassen der mindestens einen Doppelbandpresse wird die verdichtete Holzwerkstoffplatte in mindestens eine Kühlpresse eingeführt, in welcher ein Abkühlen der verdichteten Holzwerkstoffplatte auf Temperaturen zwischen 10 und 100°C, bevorzugt 15 und 70 °C, insbesondere bevorzugt 20 und 40°C erfolgt. Dabei wird in der mindestens einen Kühlpresse ein Druck angewendet, der identisch oder zumindest fast identisch ist zu dem Druck in der Doppelbandpresse, d.h. in der Kühlpresse herrscht ein Druck zwischen 2 MPa und 10 MPa, bevorzugt 3 MPa und 8 MPa, insbesondere bevorzugt 5 und 7 MPa.

Das Einführen der verdichteten Holzwerkstoffplatte in eine Kühlpresse ist notwendig, da die Rückstellkräfte der Fasern so groß sein können, dass die Platte ohne den Schritt des Kühlpressens nach dem Verdichten in der Doppelbandpresse wieder aufgehen würde.

Nach dem Verlassen der Kühlpresse weisen die verdichteten Holzwerkstoffplatten eine Dicke zwischen 2 und 15 mm, bevorzugt 3 und 12 mm, insbesondere bevorzugt 4 und 10 mm auf.

Die Rohdichte der verdichteten Holzwerkstoffplatten nach Verlassen der Kühlpresse liegt in einem Bereich zwischen 500 und 1500 kg/m³, bevorzugt zwischen 650 und 1300 kg/m³, insbesondere bevorzugt zwischen 800 und 1100 kg/m³.

Zur Herstellung einer Holzwerkstoffplatte mit einer Rohdichte von 850 kg/m³ wird z.B. vorteilhafterweise ein Pressdruck in der Doppelbandpresse (und auch Kühlpresse) von 4,5 bis 5 MPa (45-50 bar) bei einer Presstemperatur in der Doppelbandpresse des Vorlaufes von 235°C und einer Presstemperatur auf der Oberfläche der Platte von 220°C angelegt. Im Falle der Herstellung einer Holzwerkstoffplatte mit einer Rohdichte von 950 kg/m³ wird vorteilhafterweise ein Pressdruck in der Doppelbandpresse (und auch Kühlpresse) von 5,5 bis 6 MPa (55-60 bar) bei einer Presstemperatur in der Doppelbandpresse des Vorlaufes von 235°C und einer Presstemperatur auf der Oberfläche der Platte von 220 °C angelegt.

In einer besonders bevorzugten Ausführungsform umfasst das Verfahren zur Herstellung der vorliegenden Holzwerkstoffplatte die folgenden Schritte:
- Bereitstellen von Holzfasern und Kunststofffasern, insbesondere eines mit mindestens einer organischen Verbindung funktionalisierten Kunststoffes;
- Bilden eines Gemisches aus den Holzfasern und den Kunststofffasern in einer Blasleitung;
- Zwischenpuffern bzw. Zwischenlagern des Gemisches in einem Speiser;
- Aufblasen des Gemisches auf eine erste Walze unter Ausbildung eines ersten Vorvlieses (Airlay);
- Zerfasern des ersten Vorvlieses und nochmaliges Aufblasen des Gemisches auf eine zweite Walze unter Ausbildung eines zweiten Vorvlieses (Airlay);
- Überführen des zweiten Vorvlieses auf ein Transportband und Einführen des zweiten Vorvlieses in den mindestens einen ersten Temperofen zum Vorverdichten durch Thermobonding zu einer Matte;
- Überführen der vorverdichteten Matte in die mindestens eine Doppelbandpresse zum weiteren Verdichten zu einer Trägerplatte, und
- Kühlen der Trägerplatte, insbesondere in einer Kühlzone der mindestens einen Presse.

Das Bereitstellen der Holzfasern und Kunststofffasern erfolgt üblicherweise in Form von Ballen, die in entsprechenden Ballenöffnern geöffnet werden. Nach den jeweiligen Ballenöffnern werden die Fasern in separaten Wiegeeinrichtungen abgewogen und in die Blasleitung eingegeben, in welcher auf dem Weg von der Zugabe der Fasern und ggf. weiteren Komponenten bis zum Vorratsbehälter bzw. Speiser eine intensive Vermischung durch die eingeblasene Luft als Transportmittel erfolgt. Aus dem Vorratsbehälter bzw. Speiser wird das Gemisch aus Holzfasern und Kunststofffasern nach Abwiegen auf einer Flächenwaage auf ein erstes Transportband mit erster Walze über seine Breite gleichmäßig unter Ausbildung eines ersten Vorvlieses aufgeblasen. Das erste Vorvlies läuft am Ende des ersten Transportbandes in eine Zerfaserungsvorrichtung ein. Das zerfaserte Gemisch wird auf ein zweites Transportband mit zweiter Walze unter Ausbildung eines zweiten Vorvlieses aufgeblasen.

Das so erhaltene Vorvlies (hier zweites Vorvlies) wird jetzt in den bereits oben beschriebenen Temperofen zum Vorverdichten unter Ausbildung des vorverdichteten Vorvlieses eingeführt, welches anschließend in die mindestens eine Doppelbandpresse zum weiteren Verdichten zu einer Holzwerkstoffplatte überführt wird.

Die mit dem vorliegenden Verfahren hergestellten Holzwerkstoffplatten bzw. Holz-Kunststoff-Komposite (WPC) sind durch eine Quellung von weniger als 5%, bevorzugt weniger als 3%, insbesondere bevorzugt weniger als 1% gekennzeichnet.

In einer weiteren Ausführungsform des vorliegenden Verfahrens hat es sich als vorteilhaft erwiesen, dem Holzpartikel-Kunststoff-Gemisch vor dem Verdichten weitere Substanzen wie Füllstoffe oder Additive zuzugeben, die der Holzwerkstoffplatte spezielle Eigenschaften verleihen.

Als geeignete Additive können Flammenschutzmittel, lumineszierende oder antibakterielle Stoffe dem Holzpartikel-Kunststoff-Gemisch zugegeben werden. Geeignete Flammschutzmittel können ausgewählt sein aus der Gruppe enthaltend Phosphate, Borate, insbesondere Ammoniumpolyphosphat, Tris(tri-bromneopentyl)phospat, Zinkborat oder Borsäurekomplexe von mehrwertigen Alkoholen.

Weitere Additive können die UV-Beständigkeit, das Alterungsverhalten oder die elektrische Leitfähigkeit der Holzwerkstoffplatte beeinflussen. Zur Erhöhung der UV-Beständigkeit ist es z.B. bekannt, Kunststoffen sogenannte UV-stabilisierende Verbindungen wie die sogenannten HALS-Verbindungen zuzusetzen. Als Antifungizide und antibakterielle Mittel können u.a. Polyimine verwendet werden.

Auch ist es vorteilhaft, dem Holzpartikel-Kunststoff-Gemisch einen anorganischen Füllstoff zuzugeben. Als anorganischer Füllstoff können z.B. Materialien wie Talkum, Kreide, Titandioxid oder andere verwendet werden, die der Platte eine spezifische Färbung verleihen.

Wie oben ausgeführt, ist die vorliegende Holzwerkstoffplatte auf mindestens einer Seite, bevorzugt auf der Oberseite, mit mindestens einer Dekorschicht versehen.

Die mindestens eine Dekorschicht kann in verschiedener Form und Weise ausgeführt bzw. aufgebaut sein.

Die Holzwerkstoffplatte weist erfindungsgemäß eine Dekorschicht auf, die mindestens eine Dekorfolie umfasst. Eine solche Dekorfolie besteht aus mindestens einer thermoplastischen Tragschicht, aus mindestens einem auf der Tragschicht aufgedruckten Dekor oder mindestens einer separaten Dekorlage und mindestens einer Kunststoffversiegelung.

Wie erwähnt, bestehen Dekorfolien typischerweise aus einer oder mehrerer Lagen aus einem thermoplastischen Material als Tragschicht, insbesondere Polyethylen, Polypropylen oder Polyurethan. Das Dekor kann auf diese Tragschicht direkt aufgedruckt werden oder als separate Dekorlage auf der Tragschicht vorgesehen sein. Das Dekor wird wiederum mit einer Kunststoffversiegelung z.B. in Form einer Polypropylen-Folie, Polyurethan-Folie oder in Form eines separaten Lackes (z.B. ESH-Lack) versehen, wobei die Kunststoffversiegelung als Verschleißschutzschicht mit den entsprechenden verschleißhemmenden Partikeln (siehe hierzu auch weiter unten) versehen sein kann. Bei der Dekorfolien handelt es sich somit um ein Lagenpaket aus Tragschicht, Dekor und Versiegelung, die selbst ein fertiges Laminat bzw. einen fertigen Verbund bilden, der als Dekorschicht einsetzbar ist.

Eine derartige Dekorfolie kann bevorzugt auf die Holzwerkstoffplatte unter Verwendung von mindestens einem Kleber aufkaschiert werden, oder während des Herstellungsprozesses der Holzwerkstoffplatte, insbesondere während des Verdichtens des Holzfaservlieses zur Holzwerkstoffplatte, auf die selbige aufgepresst werden.

Alternativ weist die erfindungsgemäße Holzwerkstoffplatte eine Dekorschicht in Form einer dekorativen Finish-Folie auf. Eine dekorative Finish-Folie besteht aus einem aminoharzgefüllten dekorativen Papier und mindestens einer darauf vorgesehenen Lackschicht. Das dekorative Papier ist entweder mit dem entsprechenden Aminoharz (z.B. Melamin-Formaldehyd-Harz oder Harnstoff-Formaldehyd-Harz) beleimt oder schwach imprägniert.

Die Finish-Folie wird bevorzugt auf die Holzwerkstoffplatte unter Verwendung von mindestens einem Kleber aufkaschiert.

Die dekorative Finish-Folie kann nach dem Aufkaschieren auf die Holzwerkstoffplatte mit mindestens einer weiteren Lackschicht, bevorzugt zwei oder drei Lackschichten, aus einem UV-härtbaren und/oder einem Elektronenstrahlhärtbaren (ESH)-Lack versehen werden.

Als UV-härtbare und/oder Elektronenstrahl(ESH)-härtbare Lacke sind insbesondere strahlenhärtbare, acrylathaltige Lacke einsetzbar. Typischerweise enthalten die verwendeten strahlenhärtbaren Lacke Methacrylate, wie z.B. Polyester(meth)acrylate, Polyether(meth)acrylate, Epoxy(meth)acrylate oder Urethan(meth)acrylate. Es ist auch denkbar, dass das verwendete Acrylat bzw. der acrylathaltige Lack substituierte oder unsubstituierte Monomere, Oligomere und/oder Polymere, insbesondere in Form von Acrylsäure, Acrylether und/oder Acrylsäureester-Monomeren, -Oligomeren oder -Polymeren enthält.

Der UV-härtbare Lack und/oder Elektronenstrahl (ESH)-härtbare Lack kann abriebfeste Partikel, natürliche und/oder synthetische Fasern und auch weitere Additive enthalten. Die im UV-Lack enthaltenen abriebfesten bzw. verschleißhemmenden Partikel sind insbesondere ausgewählt aus der Gruppe enthaltend Aluminiumoxide (z. B. Korund), Borcarbide, Siliziumdioxide (z. B. Glaskugeln), Siliziumcarbide.

Es können auch natürliche oder synthetische Fasern, ausgewählt aus der Gruppe enthaltend Holzfasern, Zellulosefasern, partiell gebleichte Zellulosefasern, Wollfasern, Hanffasern und organische oder anorganische Polymerfasern, dem UV-und/oder ESH-Lack zugefügt werden. Als weitere Additive können Flammschutzmittel und/oder lumineszierende Stoffe zugegeben werden. Geeignete Flammschutzmittel können ausgewählt sein aus der Gruppe enthaltend Phosphate, Borate, insbesondere Ammoniumpolyphosphat, Tris(tribromneopentyl)phosphat, Zinkborat oder Borsäurekomplexe von mehrwertigen Alkoholen. Als lumineszierende Stoffe können fluoreszierende oder phosphoreszierende Stoffen, insbesondere Zinksulfit und Alkalialuminate zum Einsatz kommen.

In einer Ausführungsform sind bevorzugterweise mehr als eine strahlenhärtbare Schutzschicht, bevorzugt zwei oder drei Schutz- bzw. Verschleißschichten, vorgesehen, die jeweils aufeinander angeordnet oder aufgetragen werden. So ist es z.B. möglich, zunächst eine erste Lage eines UV-härtbaren Lackes gefolgt von einer zweiten Lage eines ESH-Lackes und wiederum gefolgt von einer dritten Lage eines ESH-Decklackes aufzutragen. Die einzelnen Lackschichten können jeweils abriebfeste und/oder Nanopartikel enthalten, wobei es insbesondere wünschenswert ist, wenn der UV-Lack verschleißhemmende Partikel (wie z.B. Korund) und der ESH-Decklack Partikel zur Steigerung der Mikrokratzfestigkeit (wie z.B. Silikatnanopartikel aus pyrogener Kieselsäure) umfasst.

In einer besonders bevorzugten Ausführungsform umfasst die Verschleißschicht eine erste Lage eines Korund-enthaltenen UV-Lack, der mittels UV-Trockner angeliert wird, eine zweite Lacke eines ESH-Lackes als elastischen Zwischenlack und eine dritte Lage eines ESH-Decklacke mit Nanopartikeln.

Die Lackschichten werden zunächst angehärtet, insbesondere unter Verwendung eines Eximerstrahlers zum Zwecke der Mattierung durch Mikrofaltung der Lackoberfläche, und abschließend wird der gesamte Lackaufbau endgehärtet bzw. durchgehärtet, insbesondere unter Verwendung eines ESH-Strahlers.

In solchen Fällen kann die Auftragsmenge für jede einzelne Schutzschicht bzw. Lage einer Schutzschicht zwischen 10 g/m² und 100 g/m², bevorzugt 20 g/m² und 80 g/m², insbesondere bevorzugt zwischen 30 und 50 g/m² variieren oder gleich sein. Die Gesamtauftragsmenge kann in Abhängigkeit von der Anzahl der Lagen zwischen 30 g/m² und 150 g/m², bevorzugt 50 g/m² und 120 g/m² variieren.

Auch kann die mindestens eine Verschleißschutzschicht chemische Vernetzer enthalten, z.B. auf Basis von Isocyanaten, wodurch die Zwischenhaftung der einzelnen übereinander angeordneten Verschleißschutzschichten erhöht wird.

Die in den strahlenhärtbaren Lacken verwendeten Acrylatverbindungen sind aufgrund ihrer Reaktivität in der Lage, sich an die in dem Lack vorliegenden Fasern, abriebfesten Partikel oder Additive anzulagern bzw. diese zu umhüllen. Während des weiteren Verarbeitens der Holzwerkstoffplatten kommt es zu einer chemischen Vernetzung der reaktiven Doppelbindung der Acrylatverbindungen und somit zu einer Ausbildung einer Polymerschicht auf den Fasern, Partikeln, Farbpigmenten oder Additiven, die einem Ausbleichen entgegenwirkt.

Wie erwähnt können die Dekorfolie und die dekorative Finish-Folie als Dekorschicht auf die Holzwerkstoffplatte aufkaschiert werden, z.B. in einer Kaschierpresse. Im Falle einer Kaschierung auf die Holzwerkstoffplatte, insbesondere die Oberseite der Holzwerkstoffplatte, wird zunächst ein geeignetes Bindemittel, wie z.B. ein Polyvinylacetat (PVAc)- Leim, Harnstoffleim oder PU-Hotmelt, auf die Oberseite aufgetragen. Die notwendigen (flüssigen) Bindemittelmengen liegen zwischen 20 und 50 g/m², bevorzugt 30 und 40 g/m². Im Falle der Verwendung von PU-Hotmelt betragen die Auftragsmengen zwischen 50 und 150 g/m², bevorzugt zwischen 70 und 100 g/m². Der Vorschub der Kaschierlinie beträgt zwischen 10 und 50 m/min, bevorzugt 20 und 30 m/min. Aufgrund der in der Kaschierpresse herrschenden hohen Temperaturen erfolgt im Falle der Finish-Folie eine Restaushärtung des Harzimprägnates des dekorativen Papiers der Finish-Folie.

In der erfindungsgemäßen Holzwerkstoffplatte weist alternativ die mindestens eine Dekorschicht mindestens eine aminoharzimprägnierte Dekorpapierlage und mindestens eine aminoharzimprägnierte Overlaypapierlage auf, wobei die Dekorpapierlage und die Overlaypapierlage mit der Holzwerkstoffplatte verpresst werden.

Dekorpapiere bzw. Dekorpapierlagen wiederum sind einlagige Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten muss das verwendete Papier eine gute Glätte und Dimensionsstabilität aufweisen und ebenfalls für eine Penetration einer notwendigen Kunstharzimprägnierung geeignet sein. Vorzugsweise werden Dekorpapiere mit einer Imprägnierung, wie beispielsweise einer wärmehärtbaren Kunstharzimprägnierung, verwendet.

Häufig wird das Dekorpapier zusammen mit einer Verschleißschicht (Overlaypapierlage) als eine einzelne Schicht geliefert. Als Overlay werden dünne Papiere verwendet, welche typischerweise bereits mit einem Melaminharz getränkt wurden Es sind ebenfalls Overlays erhältlich, in denen bereits abriebfeste Partikel, wie zum Beispiel abriebfeste Partikel vorzugsweise ausgewählt aus der Gruppe enthaltend Aluminiumoxide, Borcarbide, Siliziumdioxide, Siliziumcarbide und Glaspartikel, in das Harz des Overlays eingemischt sind, um die Abriebfestigkeit des Laminats bzw. der Holzwerkstoffplatte zu erhöhen.

In einer anderen Variante wird die mindestens eine Dekorpapierlage nach Aufbringen auf die Oberseite der Holzwerkstoffplatte unter Einwirkung von Druck und Temperatur (z.B. in einer Kurztaktpresse) verpresst (z.B. unter Ausbildung eines Laminats).

In einer weiteren Ausführungsform kann auf die Unterseite der Holz-Kunststoff-Verbundwerkstoff-Platte ein Gegenzug aufgebracht werden. Dadurch werden insbesondere die, durch die auf der Oberseite der Holz-Kunststoff-Verbundwerkstoff-Platte aufgebrachten Dekor- und Overlaylagen wirkenden Zugkräfte ausgeglichen. In einer bevorzugten Ausführungsform wird der Gegenzug als Zelluloselage ausgeführt, die imprägniert ist. Beispielsweise kann der Gegenzug als ein mit einem wärmehärtbaren Kunstharz imprägniertes Papier ausgeführt sein. In einer besonders bevorzugten Ausführungsform entspricht der Schichtaufbau des Gegenzugs dem Schichtaufbau und der jeweiligen Schichtdicke genau der auf der Oberseite aufgebrachten Schichtfolge aus Dekor- und Overlaylagen.

In einer bevorzugten Ausführungsform werden die Dekorpapier- und/oder Overlaypapierlagen und der Gegenzug mit der großformatigen Holz-Kunststoff-Verbundwerkstoff-Platte in einem Arbeitsschritt unter Wirkung von Temperatur und Druck in einer Kurztaktpresse zu einem Laminat verpresst.

Übliche Kurztakt-Pressen arbeiten beispielsweise bei einem Druck von 30 bis 60 kg/cm², einer Temperatur an der Holzwerkstoffoberfläche von etwa 165 - 175 °C und einer Presszeit von 6 bis 12 Sekunden.

Bei Verwendung der Holz-Kunststoff-Verbundwerkstoff-Platten gemäß der Erfindung als Trägermaterialen arbeiten die Kurztaktpressen vorzugsweise bei 30 °C bis 40 °C niedrigeren Temperaturen als bei der Herstellung von Laminaten auf Basis von herkömmlichen Holzfaserplatten. In einer besonders bevorzugten Ausführungsform arbeiten die Kurztaktpressen bei Verwendung der Holz-Kunststoff-Verbundwerkstoff-Platten gemäß der Erfindung bei einer Temperatur von 140°C bis 160°C, an der Plattenoberfläche, ganz besonders bevorzugt bei 150°C an der Plattenoberfläche.

Die Presszeit der Kurztaktpresse liegt bei Verwendung der Holz-Kunststoff-Verbundwerkstoff-Platten gemäß der Erfindung bei 5 bis 15 s, vorzugsweise bei 7 bis 12 s, besonders bevorzugt bei kleiner oder gleich 10 s, wie beispielsweise 9, 8, 7 oder 6 Sekunden.

Wenn bei der Herstellung von Laminaten auf Basis von Holz-Kunststoff-Verbundwerkstoffen Presszeiten größer als 10 s gewählt werden, muss eine Kühlung erfolgen, damit die Struktur der Holz-Kunststoff-Verbundwerkstoff-Platten nicht zerstört wird. Dies kann beispielsweise durch Kühlung der Platten unmittelbar am Auslauf der Presse mittels vorgekühlter Luft erfolgen. Eine weitere Möglichkeit ist das Kühlen mittels gekühlter Walzen oder in einer dafür ausgerüsteten Presse (Kühlzone).

Wie oben bereits angedeutet, ist es in einer weiteren Variante des vorliegenden Verfahrens auch möglich und sinnvoll, die mindestens eine Dekorschicht, insbesondere in Form einer Finish-Folie oder aminoharzimprägnierten Dekorpapierlage, bereits während des Herstellungsprozesses auf die Oberseite des vorverdichteten Vorvlieses aufzutragen. Mit anderen Worten die mindestens eine Finish-Folie wird hier beim Überführen des vorverdichteten Vorvlieses aus dem ersten Temperofen in die mindestens eine Doppelbandpresse zum Zwecke des weiteren Verdichtens simultan auf die Oberseite des Vorvlieses aufgetragen, so dass in der Folge das vorverdichtete Vorvlies zusammen mit der mindestens einen Finish-Folie (in der Doppelbandpresse) weiter verdichtet wird. Das Aufbringen der Finish-Folie kann auf einfache Art und Weise durch Zuführung der Finish-Folie zu der mindestens einen Doppelbandpresse mittels einer Abwickelvorrichtung erfolgen.

Auch das Aufbringen mehrerer Finish-Folien, beispielsweise von 2, 3, 4 oder 5 Folien ist möglich.

Es ist auch vorstellbar, dass mindestens eine Trennlage oberhalb der Finish-Folie während des Überführens des vorverdichteten Vorvlieses in die mindestens eine Doppelbandpresse simultan aufgebracht wird.

Es ist auch möglich, die Oberseiten der Holzwerkstoffplatten mit einer Prägestruktur zu versehen. Dies erfolgt bevorzugt unmittelbar im Anschluss an das Aufbringen der Dekorschicht auf die Holzwerkstoffplatte oder das Vorvlies.

So können während der Weiterverarbeitung der Holzwerkstoffplatte in der Kurztakt-Presse unter Verwendung eines strukturierten Pressblechs Oberflächenstrukturen in mindestens einer Oberfläche, vorzugsweise der Oberseite der Holzwerkstoffplatte wie einer Holz-Kunststoff-Verbundwerkstoff-Platte erzeugt werden, die optional auf das Dekor abgestimmt ausgeführt sein können (so genannte dekorsynchrone Struktur). Vorzugsweise sind die Oberflächenstrukturen weitgehend deckungsgleich zum Dekor ausgebildet. In diesem Fall spricht man von Embossed-In-Register Strukturen. Bei Holzdekoren können die Strukturen in Form von Porenstrukturen vorliegen, die der Maserung folgen. Bei Fliesendekoren können die Strukturen Vertiefungen im Bereich von dem Dekor umfasster Fugenfüllungslinien sein.

Bei der Beschichtung der Platte müssen allerdings die Presstemperaturen um 30 - 40 °C reduziert werden. Wie das Herabsetzen der Presszeiten unterhalb von 10 Sekunden dient auch diese Maßnahme dazu, einen unnötigen Wärmeeintrag in die Trägerplatte zu verhindern, der zu einer unerwünschten Plastifizierung und damit zu Deformationen führen würde.

Für den Fall der Strukturierung der Oberfläche des Vorvlieses sind folgende Ansätze möglich:
a. Verwendung einer bereits strukturierten Finish-Folie;
b. Verwendung eines Strukturgeberpapiers, das zwischen dem oberen Band der Doppelbandpresse und der Oberseite des vorverdichteten Vorvlieses mitgeführt wird; oder
c. Einprägen einer Struktur während des Durchlaufs durch die Doppelbandpresse durch Verwendung eines oberen Bandes der Doppelbandpresse, das seinerseits eine Struktur aufweist.

Die strukturierte Finish-Folie gemäß der Möglichkeit a) kann beispielsweise eine Kunststofffolie sein, die ihrerseits bereits strukturiert ist.

Gemäß einer weiteren Ausgestaltung kann es auch vorgesehen sein, dass die Holzwerkstoffplatte in Form eines WPC zumindest in einem Randbereich der Platte eine Profilierung aufweist, wobei das Profil beispielsweise die Einbringung eines Nut- und/oder Federprofils in eine Kante bzw. Seitenfläche der Holzwerkstoffplatte ermöglicht, wobei die so erhaltenen Paneele bzw. Holzwerkstoffplatten miteinander verbunden werden können und eine schwimmende Verlegung und Abdeckung eines Bodens ermöglichen.

Mittels des vorliegenden Verfahrens ist es nunmehr möglich eine Holzwerkstoffplatte, insbesondere ein Holz-Kunststoff-Verbundwerkstoff, herzustellen, welche ein Gemisch aus Holzpartikeln und mindestens einen Kunststoff, insbesondere einem mit einer organischen Verbindung funktionalisierten Kunststoff umfasst, wobei die mindestens eine organischen Verbindung über mindestens eine funktionellen Gruppe zur Ausbildung einer Bindung mit den OH-Gruppen der Holzpartikel aufweist.

Wegen des hohen Kunststoffgehaltes besitzt die vorliegende Holzwerkstoffplatte eine deutlich reduzierte Quellung im Vergleich zu Standard-HDF-Platten oder auch quellreduzierten HDF-Platten. Diese erreichen im beschichteten Zustand bei dem Kantenquelltest gemäß der DIN EN 13329 bei hoher Melaminverstärkung des verwendeten Leims, Kantenquellwerte um ca. 7%. Das erfindungsgemäße WPC erreicht in beschichtetem Zustand Kantenquellungen von < 3,5%.

Die vorliegende Holzwerkstoffplatte weist eine Vielzahl von Vorteilen auf: Beibehaltung der guten mechanischen Eigenschaften, Standardtechnologien sind nutzbar, wie beispielsweise Kaschieren mit bekannten Kaschierpressen und/oder Lackieren mit bekannten Lackierstraßen, großformatige Platte kann optimal verarbeitet werden, sehr niedrige Quellung der Trägerplatte und des fertigen Fußbodens.

Die vorliegende Holzwerkstoffplatte, insbesondere die mit entsprechenden Dekoren und Verschleißschichten versehenen Holz-Kunststoff-Verbundwerkstoff-Platten, können als Beläge für Wand, Boden oder Decken oder für Möbel eingesetzt werden. Das bevorzugte Anwendungsgebiet ist der Bereich des Bodenbelags und, erfindungsgemäß, Laminatboden.

Die Erfindung wird nachfolgend unter Bezugnahme auf die Figuren der Zeichnung an mehreren Ausführungsbeispielen näher erläutert. Es zeigt:
- Figur 1: eine schematische Darstellung einer ersten Ausführungsform des vorliegenden Verfahrens, und
- Figur 2: eine schematische Darstellung einer zweiten Ausführungsform des vorliegenden Verfahrens.

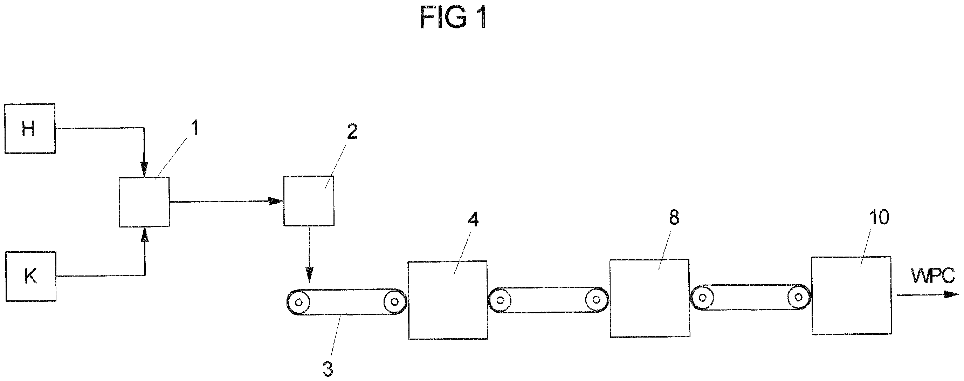

Das in Figur 1 gezeigte Verfahrensschema umfasst eine Mischvorrichtung 1, in welche Holzfasern H und Kunststoff K, z.B. mit Maleinsäureanhydrid funktionalisierte Biko-Fasern eingebracht werden. Die Mischvorrichtung 1 kann z.B. in Form einer Blasleitung vorliegen, in welcher durch die eingeblasene Luft eine intensive Vermischung der Holzfasern und der funktionalisierten Biko-Fasern erfolgt.

Aus der Mischvorrichtung 1 gelangt das Fasergemisch in eine Streuvorrichtung 2, aus welcher das Fasergemisch mechanisch ausgetragen wird und unter Bildung eines Vorvlieses auf ein Transportband 3 gestreut wird. Die Streuvorrichtung 2 kann z.B. in Form eines Walzenstreukopfes ausgebildet sein. Unterhalb des Transportbandes kann eine Waage z.B. in Form einer Bandwaage angeordnet sein, welche kontinuierlich das Gewicht des Vorvlieses ermittelt.

Das Transportband 3 führt das Vorvlies in einen Temperofen 4 z.B. in Form eines Durchströmungsofens mit einem Vorschub von bis zu 15 m/min ein. Im Temperofen erfolgt bei Temperaturen von bis zu 200°C ein Vorverdichten des Vorvlieses, wobei die Biko-Fasern angeschmolzen werden und eine Verbindung der Biko-Fasern mit den Holzfasern bewirkt wird. Die Dicke des den Temperofen verlassenen Vorvlieses kann zwischen 20 und 100 mm betragen.

Nach Verlassen des Temperofens 4 wird das vorverdichtete Vorvlies unmittelbar in eine Doppelbandpresse 5 mit einem Vorschub von bis zu 12 m/min eingeführt. In der Doppelbandpresse 5 erfolgt die weitere Verdichtung des Vlieses bzw. Vorvlieses bei einem Druck von z.B. 3 MPa und einer Temperatur von z.B. 220° auf eine Dicke zwischen 2 und 15 mm.

Nach dem Anschmelzen der Biko-Fasern muss der Verdichtungszustand der die Doppelbandpresse 8 verlassene Platte so lange konstant gehalten werden, bis die Biko-Fasern soweit abgekühlt sind, dass die Erweichungstemperatur der selbigen sicher unterschritten ist, um ein "Aufgehen" der verdichteten Platte bedingt durch die Rückstellkräfte der Biko-Fasern zu verhindern. Hierzu wird die die Doppelbandpresse 8 verlassene verdichtete Platte unmittelbar in eine Kühlpresse 10 eingeführt, in welcher eine Abkühlung der verdichteten Platte auf Temperaturen zwischen 15 und 40°C erfolgt. Die Kühlung der Kühlpresse kann z.B. mittels Wasserkühlung erfolgen. Heiz- und Kühlsegment können auch gemeinsam in die Doppelbandpresse integriert sein und über ein gemeinsames Transportband miteinander verbunden sein.

Nach Verlassen der Kühlpresse 10 weist die verdichtete (WPC) Platte eine Dicke zwischen 2 und 12 mm und eine Rohdichte von z.B. 800 bis 1100 kg/m³ auf. Die WPC-Platte kann anschließend beliebig weiterverarbeitet (z.B. Auftragen von Dekorschichten) und konfektioniert werden.

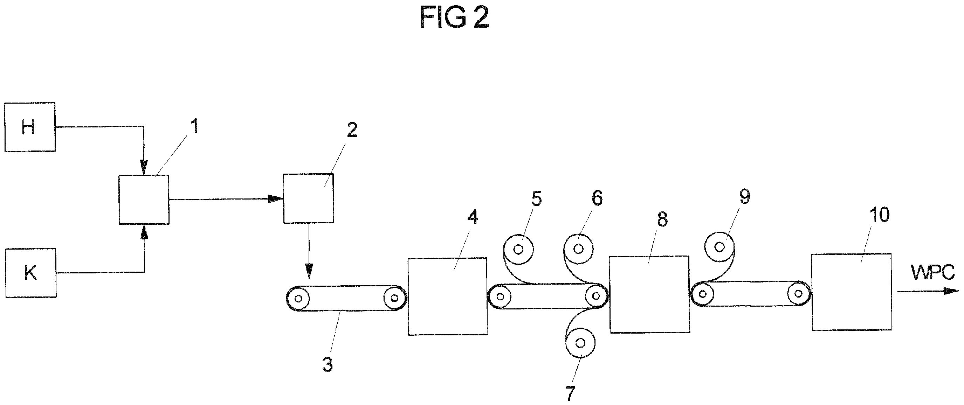

Das in Figur 2 gezeigte Verfahrensschema unterscheidet sich von dem Schema der Figur 1 dahin gehend, dass nach Verlassen des Temperofens 4 das vorverdichtete Vorvlies unmittelbar in eine Doppelbandpresse 8 mit einem Vorschub von bis zu 12 m/min eingeführt, wobei gleichzeitig mittels der Abwickelvorrichtung 5 eine dekorative Finishfolie auf die Oberseite des Vorvlieses und mittels der Abwickelvorrichtung 7 ein Gegenzugpapier auf die Unterseite des Vorvlieses aufgetragen werden. Wahlweise kann nach Auftragen des dekorativen Finish-Folie mit der Abwickelvorrichtung 5 noch ein Trennpapier oder eine Trennfolie aufgetragen werden mit der Abwickelvorrichtung 6. In der Doppelbandpresse 8 erfolgt die weitere Verdichtung des Vlieses bzw. Vorvlieses bei einem Druck von z.B. 3 MPa und einer Temperatur von z.B. 160° auf eine Dicke zwischen 2 und 15 mm, beispielsweise auf 4,5 mm.

### Ausführungsbeispiel 1a: Herstellung einer ersten WPC-Trägerplatte

Aus Ballenöffnern wurden Holzfasern (44 Gew.%) und ein Gemisch aus BiCo-Fasern (55 Gew.%, Polyethylenterephthalat/ Polyethylenterephthalat-Coisophtalat) und 1 Gew% LLDPE-Fasern gegraftet mit Maleinsäureanhydrid bereitgestellt und einer Blasleitung als Mischvorrichtung unter Ausbildung eines Holzfaser-Kunststofffaser-Gemisches zugeführt. Das Holzfaser-Kunststofffaser-Gemisch wird in einem Speiser zwischengepuffert.

Anschließend wird das Holzfaser-Kunststofffaser-Gemisch auf eine erste Walze zur Ausbildung eines ersten Vorvlieses (Airlay) aufgeblasen, das erste Vorvlies wird zerfasert und das zerfaserte Gemisch wird nochmalig auf eine weitere zweite Walze unter Ausbildung eines zweiten Vorvlieses (Airlay) aufgeblasen.

Das zweite Vorvlies (Flächengewicht: 4.200g/m²) wird auf ein Förderband in einer Breite von 2.800 mm abgelegt. Der Vorschub des Förderbands lag bei ca. 6 m/min.

Das Vorvlies wurde in einem Durchströmungsofen bei Temperaturen von bis zu 160°C auf eine Stärke von 35 mm zu einem Vlies bzw. einer Matte durch Thermobonding vorverdichtet. Dabei erreichte das Vlies eine Kerntemperatur von ca. 130 °C.

Die Matte (Format: 2650 x 2150 mm, Dicke: 35 mm, Flächengewicht: 3100 g/m²) wird in einer Doppelbandpresse bei ca. 220°C und 50 bar auf etwa 4 mm verdichtet. Anschließend wird das zu einer Platte verdichtete Vlies in einer Durchlaufpresse mit Kühlung auf ca. 50 °C abgekühlt. Die Platten werden besäumt (Format: 2600 x 2070 mm; Dicke beträgt etwa 4 mm) und geschliffen.

### Ausführungsbeispiel 1b: Herstellung einer zweiten WPC-Trägerplatte

In Analogie zu Ausführungsbeispiel 1a erfolgt die Herstellung der Matte (vorverdichtetes Vlies) durch Vermischen der Fasern und Bildung eines Vorvlieses mit nachfolgendem Thermobonding zur Ausbildung einer Matte, bei der sich zwischen erwärmtem Kunststoff und Holzfasern Klebpunkte ausbilden.

Das Verhältnis von Kunststofffasern zu Holzfasern liegt bei 56 zu 44 %. Die Kunststofffasern sind Bikomponentenfasern aus PE/PP, die mit Maleinsäureanhydrid gegraftet sind. Das Maleinsäureanhydrid dient als Koppler an die OH-Gruppen der Cellulose der Holzfasern.

Die Matte (Format: 2650 x 2150 mm, Dicke: 35 mm, Flächengewicht: 3100 g/m²) wird hierbei in einer Doppelbandpresse bei ca. 220 °C und 50 bar auf etwa 4 mm verdichtet. Anschließend wird das verdichtete Vlies in einer Durchlaufpresse mit Kühlung auf ca. 50°C abgekühlt. Die Platten werden besäumt (Format: 2600 x 2070 mm; Dicke beträgt etwa 4 mm) und geschliffen.

### Ausführungsbeispiel 2: WPC mit aufkaschierter dekorativer Folie

Die WPC-Formate des Ausführungsbeispiels 1a wurden nach Abkühlung auf der Oberseite mit einer dekorativen Polypropylenfolie für Fussboden-Anwendungen und auf der Rückseite mit einem Gegenzug auf Basis eines geleimten Papiers beklebt. Die Verklebung erfolgt mit einem PU-Hotmelt. Die Auftragsmengen des Klebers liegen auf der Oberseite bei 100 g/m² und auf der Unterseite bei 50 g/m².

Aus den oben genannten Formaten wurden Fußbodendielen produziert, die an den Seitenflächen mit Verbindungsprofilen nach Art einer Nut und Feder ausgestattet werden. Die so erhaltenen Paneele sind zur Abdeckung eines Bodens geeignet und werden schwimmend verlegt.

### Ausführungsbeispiel 3: WPC mit aufkaschierter dekorativer Papierlaae (Finishfolie), die abriebfest mit Lack versiegelt ist

Die in Ausführungsbeispiel 1b hergestellte WPC-Trägerplatte wird in einer Kaschierpresse mit einem dekorativen, harzgefüllten und in der Oberfläche lackierten Papier beschichtet. Auf der Unterseite wird ein Gegenzug (Papier) aufkaschiert. Für die Kaschierung wird ein PVAc-Leim eingesetzt, der beidseitig in einer Menge von etwa 30 g/m² flüssig aufgetragen wird. Der Vorschub an der Kaschierlinie beträgt etwa 20 m/min. Die Temperatur im Thermoöl liegt bei etwa 200 °C.

Die dekorierte Seite der Platte (Format 1300 x 1300 x 4 mm) wird in einer Lackierstrasse mit mehreren Lackaufträgen ablackiert. Dabei wird zunächst ein korundgefüllter UV-Grundlack aufgetragen (Auftragsmenge etwa 80 g/m²). Dieser wird mit einem UV-Strahler angeliert. Danach wird ein elastischer Zwischenlack, ein ESH-Lack aufgetragen (Auftragsmenge etwa 50 g/m²). Dieser wird mit einem Elektronenstrahler angehärtet. Anschließend wird ein ESH-Decklack aufgetragen, der mit Nanopartikeln zur Steigerung der Microkratzfestigkeit ausgerüstet ist (Auftragsmenge etwa 20 g/m²). Dieser Lack wird zunächst mit einem Eximerstrahler in der Oberfläche angehärtet (dies geschieht zur Mattierung durch Mikrofaltung der Lackoberfläche) und anschließend der gesamte Lackaufbau mit einem ESH-Strahler endgehärtet im Sinne von durchgehärtet.

Aus den großformatigen Platten werden nach einer Ruhezeit von etwa zwei Tagen an einer Fußbodenstraße Paneele hergestellt, die mit Verbindungsprofilen an den Seitenkanten ausgestattet sind, die zur leimlosen Verbindung und Verriegelung solcher Paneele zu einem schwimmend verlegten Fußbodenbelag geeignet sind.

### Ausführungsbeispiel 4: WPC mit direkt auf das vorverdichtete Vlies aufkaschierter dekorativer Papierlage (Finishfolie)

In Analogie zu Ausführungsbeispiel 1a werden Vorvliese bzw. Faserkuchenzuschnitte bestehend aus 54 Gew.% Kunststofffasern (27 Gew.% PE-Fasern, 25 Gew.% PET-Bico-Fasern und 2 Gew% LLDPE-Fasern gegraftet mit Maleinsäureanhydrid), 44 Gew.% Holz und 2 Gew.% Paraffin mit einem Flächengewicht von 3150 g/m² , einer Dicke von 35 mm und einem Format von 1300 x 1400 mm auf ein Transportband vor einer Doppelbandpresse aufgelegt. Die Doppelbandpresse besaß eine Heizzone mit einer Länge von drei Metern und eine Kühlzone mit einer Länge von sechs Metern.

Von oben wurde über eine Abwickelvorrichtung eine dekorative Finishfolie auf den Faserkuchen aufgelegt, das auf der Oberseite mit einem korundhaltigen, strahlenhärtenden Lack ablackiert war. Das Gewicht des lackierten Papiers lag bei ca. 200 g/m². Mit einer zweiten Abwickelvorrichtung wurde auf die dekorative Folie ein Trennpapier aufgebracht. Auf die Unterseite des Faserkuchens wurde über eine Abwickelvorrichtung ein Gegenzugpapier (Grammatur: 80 g/m²) zugeführt.

Der Faserkuchen lief dann in die Doppelbandpresse ein und wurde bei einem Vorschub von 2 m/min., einem Druck von 30 bar und einer Temperatur am oberen und unteren Stahlband von 160 °C auf eine Stärke von 4,5 mm komprimiert. Mit einem mitlaufenden Thermoelement wurde die Temperatur in der Faserkuchenmitte bestimmt. Sie lag am Ende bei 140 °C. Hinter der Presse wurde das Trennpapier aufgewickelt. Das dekorative Papier und das Gegenzugpapier waren homogen und faltenfrei auf die während des Pressvorgangs entstandene WPC-Platte (WPC = wood plastic composite, Holz-Kunststoff-Verbundwerkstoff) aufgepresst worden. Beim Gitterschnitttest konnte das dekorative Papier nur mit vollflächigem Faserbesatz auf der Rückseite abgeschält werden, was auf eine sehr gute Verbindung zwischen Folie und WPC-Platte schließen lässt.

### Ausführungsbeispiel 5: Laminat aus WPC

Eine z.B. gemäß den Ausführungsbeispielen 1a, b hergestellte WPC-Platte (5 mm, Rohdichte: 850 kg/m³, Verhältnis Kunststoff zu Holzfasern 56 % zu 44 %) wird in einer Kurztakt-Presse mit einem Aufbau beschichtet, der üblicherweise für einen Laminatboden verwendet wird. Dieser war folgendermaßen:
- Oberseite
   - Overlay mit Melaminharzimprägnierung (korundgefüllt),
   - Dekorpapier mit Melaminharzimprägnierung
- Unterseite
   - Gegenzug mit Melaminharzimprägnierung

Bei den imprägnierten Papieren handelte es sich bezüglich Harzauftrag, VC-Wert (VC-Wert = Gehalt an flüchtigen Bestandteilen) und der Reaktivität um Standardprodukte. Die Beschichtung wurde bei ca. 150 °C (Temperatur am Produkt), 40 bar und 9 Sekunden Presszeit ausgeführt. Anschließend wurde die beschichtete Platte abgekühlt und nach einer definierten Lagerzeit an einer Fußbodenstraße zu Dielen mit einem leimlosen Verbindungsprofil aufgetrennt. Aus der Produktion wurden Dielen entnommen und gemäß der DIN EN 13329 einem Kantenquelltest unterworfen. Dabei wurde nach 24 h Prüfdauer eine Kantenquellung von 2,5 % festgestellt. Nach dem Rücktrocknen bei Raumtemperatur ging diese auf 0,5 % zurück.

## Patentansprüche

1. Holzwerkstoffplatte aus einem Holz-Kunststoff-Verbundwerkstoff (WPC), aus einem Gemisch aus Holzfasern und Kunststofffasern, umfassend
Holzfasern mit einer Länge von 1,0 mm bis 10 mm und einer Dicke von 0,05 bis 1 mm und Kunststofffasern, wobei die Kunststofffasern mit mindestens einer organischen Verbindung funktionalisiert sind,
wobei das Mischungsverhältnis von Holzfasern und Kunststofffasern zwischen 70 Gew% Holzfaser / 30 Gew% Kunststofffasern und 40 Gew% Holzfasern / 60 Gew% Kunststofffasern beträgt, und
wobei auf mindestens einer Seite der Holzwerkstoffplatte mindestens eine Dekorschicht vorgesehen ist,
wobei
die mindestens eine Dekorschicht mindestens eine Dekorfolie bestehend aus mindestens einer thermoplastischen Tragschicht, aus mindestens einem auf der Tragschicht aufgedruckten Dekor oder mindestens einer separaten Dekorlage und aus mindestens einer Kunststoffversiegelung umfasst.

2. Holzwerkstoffplatte aus einem Holz-Kunststoff-Verbundwerkstoff nach Anspruch 1, **dadurch gekennzeichnet, dass** die Dekorfolie auf die Holzwerkstoffplatte unter Verwendung von mindestens einem Kleber aufkaschiert ist.

3. Holzwerkstoffplatte aus einem Holz-Kunststoff-Verbundwerkstoff nach Anspruch 1, **dadurch gekennzeichnet, dass** die Dekorfolie während des Herstellungsprozesses der Holzwerkstoffplatte auf das vorverdichtete Vlies aufgelegt wird und zusammen mit dem vorverdichteten Vlies weiter zur Holzwerkstoffplatte verdichtet wird.

4. Holzwerkstoffplatte aus einem Holz-Kunststoff-Verbundwerkstoff aus einem Gemisch aus Holzfasern und Kunststofffasern, umfassend
Holzfasern mit einer Länge von 1,0 mm bis 10 mm und einer Dicke von 0,05 bis 1 mm und Kunststofffasern, wobei die Kunststofffasern mit mindestens einer organischen Verbindung funktionalisiert sind,
wobei das Mischungsverhältnis von Holzfasern und Kunststofffasern zwischen 70 Gew% Holzfaser / 30 Gew% Kunststofffasern und 40 Gew% Holzfasern / 60 Gew% Kunststofffasern beträgt, und
wobei auf mindestens einer Seite der Holzwerkstoffplatte mindestens eine Dekorschicht vorgesehen ist,
wobei
die mindestens eine Dekorschicht in Form einer dekorativen Finish-Folie ist, welche aus einem aminoharzgefüllten Dekorpapier und mindestens einer darauf vorgesehen Lackschicht besteht.

5. Holzwerkstoffplatte nach Anspruch 4, **dadurch gekennzeichnet, dass** die dekorative Finish-Folie auf die Holzwerkstoffplatte unter Verwendung von mindestens einem Kleber aufkaschiert ist.

6. Holzwerkstoffplatte nach Anspruch 5, **dadurch gekennzeichnet, dass** die dekorative Finish-Folie nach dem Aufkaschieren auf die Holzwerkstoffplatte mit mindestens einer weiteren Lackschicht, bevorzugt zwei oder drei Lackschichten, aus einem UV-härtbaren und/oder einem Elektronenstrahlhärtbaren (ESH)-Lack versehen wird.

7. Holzwerkstoffplatte aus einem Holz-Kunststoff-Verbundwerkstoff aus einem Gemisch aus Holzfasern und Kunststofffasern, umfassend
Holzfasern mit einer Länge von 1,0 mm bis 10 mm und einer Dicke von 0,05 bis 1 mm und Kunststofffasern, wobei die Kunststofffasern mit mindestens einer organischen Verbindung funktionalisiert sind,
wobei das Mischungsverhältnis von Holzfasern und Kunststofffasern zwischen 70 Gew% Holzfaser / 30 Gew% Kunststofffasern und 40 Gew% Holzfasern / 60 Gew% Kunststofffasern beträgt, und
wobei auf mindestens einer Seite der Holzwerkstoffplatte mindestens eine Dekorschicht vorgesehen ist,
wobei
die mindestens eine Dekorschicht mindestens eine aminoharzimprägnierte Dekorpapierlage und mindestens eine Overlaypapierlage umfasst, wobei die Dekorpapierlage und gegebenenfalls die Overlaypapierlage mit der Holzwerkstoffplatte verpresst werden.

8. Holzwerkstoffplatte nach einem der vorhergehenden Ansprüche, **dadurch gekennzeichnet, dass** die Kunststofffasern aus einem thermoplastischen Kunststoff, insbesondere ausgewählt aus der Gruppe enthaltend Polyethylen (PE), Polypropylen (PP), Polyester, wie Polyethylenterephthalat, oder Mischungen davon, insbesondere von Polypropylen (PP) und Polyethylen (PE), bestehen.

9. Holzwerkstoffplatte nach einem der vorhergehenden Ansprüche, **dadurch gekennzeichnet, dass** die mindestens eine organische Verbindung mindestens eine funktionelle Gruppe aufweist, wobei die funktionelle Gruppe ausgewählt ist aus einer Gruppe enthaltend -CO₂H, - CONH2, -COO-, insbesondere Maleinsäure, Phthalsäure, Bernsteinsäure, Glutarsäure, Adipinsäure oder deren Anhydride, Succinimid.

10. Holzwerkstoffplatte nach einem der vorhergehenden Ansprüche, **dadurch gekennzeichnet, dass** die mindestens eine organische Verbindung in den Kunststofffasern in einer Menge zwischen 0,1 und 5 Gew%, bevorzugt zwischen 0,5 und 3 Gew%, insbesondere bevorzugt zwischen 1 und 2 Gew% enthalten ist.

11. Holzwerkstoffplatte nach einem der vorhergehenden Ansprüche, **dadurch gekennzeichnet, dass** auf mindestens einer Seite, bevorzugt der der Dekorschicht gegenüberliegenden Seite, mindestens ein Gegenzugpapier aufgetragen ist.

12. Holzwerkstoffplatte nach einem der vorhergehenden Ansprüche, **dadurch gekennzeichnet, dass** in einem Randbereich der Holzwerkstoffplatte eine Profilierung zum Einbringen eines Nut- und/oder Federprofils in eine Kante der Holzwerkstoffplatte vorgesehen ist.

13. Holzwerkstoffplatte nach einem der vorhergehenden Ansprüche, **gekennzeichnet durch** eine Plattendicke zwischen 2 und 15 mm, bevorzugt 3 und 12 mm, insbesondere bevorzugt 4 und 10 mm und eine Rohdichte zwischen 500 und 1500 kg/m³, bevorzugt zwischen 650 und 1300 kg/m³, insbesondere bevorzugt zwischen 800 und 1100 kg/m³.

14. Verwendung einer Holzwerkstoffplatte in Form eines Holz-Kunststoff-Verbundwerkstoffes (WPC) nach einem der vorhergehenden Ansprüche für einen Laminatboden.

15. Verfahren zur Herstellung einer Holzwerkstoffplatte aus einem Holz-Kunststoff-Verbundwerkstoff nach einem der Ansprüche 1 bis 13, umfassend die Schritte:
- Aufbringen eines Gemisches aus Holzfasern mit einer Holzfaserfeuchte zwischen 6 und 15 %, bezogen auf das Gesamtgewicht der Holzfasern, und Kunststofffasern, wobei die Kunststofffasern mit mindestens einer organischen Verbindung funktionalisiert sind, in einem Mischungsverhältnis zwischen 70 Gew% Holzfasern / 30 Gew% Kunststofffasern und 40 Gew% Holzfasern / 60 Gew% Kunststofffasern auf ein erstes Transportband unter Ausbildung eines Vorvlieses und Einführen des Vorvlieses in mindestens einen ersten Temperofen zum Vorverdichten;
- Überführen des vorverdichteten Vlieses in mindestens eine Doppelbandpresse zum weiteren Verdichten zu einer Holzwerkstoffplatte; und
- Abkühlen der verdichteten Holzwerkstoffplatte in mindestens einer Kühlpresse auf Temperaturen zwischen 10 und 70°C .

## Claims

1. A floor panel made from a wood-based material board (WPC) of a mixture of wood fibers and polymer fibers,
comprising
wood fibers having a length of 1.0 mm to 10 mm and a thickness of 0.05 to 1 mm and polymer fibers,
wherein the polymer fibers have been functionalized with at least one organic compound,
wherein the mixing ratio of wood fibers and polymer fibers is between 70 wt% of wood fibers/30 wt% of polymer fibers and 40 wt% of wood fibers/60 wt% of polymer fibers, and
wherein at least one decorative layer has been provided on at least one side of the wood-based material board,
wherein the at least one decorative layer comprises at least one decorative film consisting of at least one thermoplastic carrier layer, of at least one decoration printed onto the carrier layer or of at least one separate decorative layer and of at least one polymer seal.

2. Floor panel made from a wood-based material board according to claim 1, wherein the decorative film has been laminated onto the wood-based material board using at least one adhesive.

3. Floor panel made from a wood-based material board according to claim 1, wherein the decorative film, during the process for producing the wood-based material board, is placed onto the pre-consolidated mat and subjected to further consolidation together with the pre-consolidated mat to give the wood-based material board.

4. A floor panel made from a wood-based material board, of a mixture of wood fibers and polymer fibers,
comprising
wood fibers having a length of 1.0 mm to 10 mm and a thickness of 0.05 to 1 mm and polymer fibers,
wherein the polymer fibers have been functionalized with at least one organic compound,
wherein the mixing ratio of wood fibers and polymer fibers is between 70 wt% of wood fibers/30 wt% of polymer fibers and 40 wt% of wood fibers/60 wt% of polymer fibers, and
wherein at least one decorative layer has been provided on at least one side of the wood-based material board,
wherein the at least one decorative layer is in from of decorative finish film which consists of an amino resin-filled decorative paper and at least one varnish layer provided thereon.

5. Floor panel according to claim 4, wherein the decorative finish film has been laminated onto the wood-based material board using at least one adhesive.

6. Floor panel according to claim 5, wherein the decorative finish film, after the lamination onto the wood-based material board, is provided with at least one further varnish layer, preferably two or three varnish layers, of a UV-curable and/or electron beam-curable (EBC) varnish.

7. A floor panel made from a wood-based material board of a mixture of wood fibers and polymer fibers, comprising
wood fibers having a length of 1.0 mm to 10 mm and a thickness of 0.05 to 1 mm and polymer fibers, wherein the polymer fibers have been functionalized with at least one organic compound,
wherein the mixing ratio of wood fibers and polymer fibers is between 70 wt% of wood fibers/30 wt% of polymer fibers and 40 wt% of wood fibers/60 wt% of polymer fibers, and
wherein at least one decorative layer has been provided on at least one side of the wood-based material board,
wherein the at least one decorative layer comprises at least one amino resin-impregnated decorative paper ply and at least one overlay paper ply, wherein the decorative paper ply and optionally the overlay paper ply have been compressed with the wood-based material board.

8. The floor panel according to one of the preceding claims, **characterized in that** the polymer fibers consist of a thermoplastic polymer, especially selected from the group comprising polyethylene (PE), polypropylene (PP), polyesters such as polyethylene terephthalate and mixtures thereof, especially from polypropylene (PP) and polyethylene (PE).

9. The floor panel according to one of the preceding claims, **characterized in that** the at least one organic compound has at least one functional group, where the functional group is selected from a group comprising -CO₂H, -CONH₂, -COO-, especially maleic acid, phthalic acid, succinic acid, glutaric acid, adipic acid or the anhydrides thereof, succinimide.

10. The floor panel according to one of the preceding claims, **characterized in that** the at least one organic compound is present in the polymer fibers in an amount between 0.1 and 5 wt%, preferably between 0.5 and 3 wt%, especially preferably between 1 and 2 wt%.

11. The floor panel according to one of the preceding claims, **characterized in that** at least one backing paper has been applied on at least one side, preferably the opposite side from the decorative layer.

12. The floor panel according to one of the preceding claims, **characterized in that** profiling has been provided in an edge region of the floor panel for introduction of a groove profile and/or tongue profile into an edge of the floor panel.

13. Floor panel according to one of the preceding claims, with a panel thickness between 2 and 15 mm, preferably 3 and 12 mm, especially preferably 4 and 10 mm, and an apparent density within a range between 500 and 1500 kg/m³, preferably between 650 and 1300 kg/m³, especially preferably between 800 and 1100 kg/m³.

14. Use of a floor panel in form of a wood-based material board (WPC) as claimed in any of the preceding claims for a laminate floor.

15. A process for producing a wood-based material board from a wood/polymer composite material as claimed in any of the claims 1-13, comprising the steps of:
- applying a mixture of wood fibers having a wood fiber moisture content between 6% and 15% in respect to the total weight of the wood fibers, and a polymer fibers, wherein the polymer fibers have been functionalized with at least one organic compound,
in a mixing ratio between 70 wt% of wood fibers/30 wt% of polymer fibers and 40 wt% of wood fibers/60 wt% of polymer fibers, to a first transport belt to form a preliminary mat and introducing the preliminary mat into at least one first heat treatment oven for pre-consolidation;
- transferring the pre-consolidated mat into at least one double belt press for further consolidation to a wood-based material board; and
- chilling the consolidated wood-based material board in at least one chill press to temperatures between 10 and 70°C.

## Revendications

1. Panneau en un matériau dérivé du bois en un matériau composite bois-matière plastique (WPC), en un mélange de fibres de bois et de fibres de matière plastique, comprenant :
des fibres de bois ayant une longueur de 1,0 mm à 10 mm et une épaisseur de 0,05 à 1 mm, et des fibres de matière plastique,
les fibres de matière plastique étant fonctionnalisées avec au moins un composé organique,
le rapport de mélange entre les fibres de bois et les fibres de matière plastique étant compris entre 70 % en poids de fibres de bois/30 % en poids de fibres de matière plastique et 40 % en poids de fibres de bois/60 % en poids de fibres de matière plastique, et
au moins une couche décorative étant prévue sur au moins un côté du panneau en un matériau dérivé du bois,
ladite au moins une couche décorative comprenant au moins un film décoratif constitué par au moins une couche support thermoplastique, par au moins un décor imprimé sur la couche support ou au moins une strate décorative séparée et par au moins un scellement en matière plastique.

2. Panneau en un matériau dérivé du bois en un matériau composite bois-matière plastique selon la revendication 1, **caractérisé en ce que** le film décoratif est contrecollé sur le panneau en un matériau dérivé du bois en utilisant au moins un adhésif.

3. Panneau en un matériau dérivé du bois en un matériau composite bois-matière plastique selon la revendication 1, **caractérisé en ce que** le film décoratif est posé sur le non-tissé pré-compacté pendant le procédé de fabrication du panneau en un matériau dérivé du bois et compacté ultérieurement en le panneau en un matériau dérivé du bois conjointement avec le non-tissé pré-compacté.

4. Panneau en un matériau dérivé du bois en un matériau composite bois-matière plastique en un mélange de fibres de bois et de fibres de matière plastique, comprenant :
des fibres de bois ayant une longueur de 1,0 mm à 10 mm et une épaisseur de 0,05 à 1 mm, et des fibres de matière plastique,
les fibres de matière plastique étant fonctionnalisées avec au moins un composé organique,
le rapport de mélange entre les fibres de bois et les fibres de matière plastique étant compris entre 70 % en poids de fibres de bois/30 % en poids de fibres de matière plastique et 40 % en poids de fibres de bois/60 % en poids de fibres de matière plastique, et
au moins une couche décorative étant prévue sur au moins un côté du panneau en un matériau dérivé du bois,
ladite au moins une couche décorative étant sous la forme d'un film de finition décoratif, qui est constitué par un papier décoratif chargé avec une résine amino et au moins une couche de vernis prévue sur celui-ci.

5. Panneau en un matériau dérivé du bois selon la revendication 4, **caractérisé en ce que** le film de finition décoratif est contrecollé sur le panneau en un matériau dérivé du bois en utilisant au moins un adhésif.

6. Panneau en un matériau dérivé du bois selon la revendication 5, **caractérisé en ce qu'**après le contrecollage sur le panneau en un matériau dérivé du bois, le film de finition décoratif est muni d'au moins une couche de vernis supplémentaire, de préférence deux ou trois couches de vernis, en un vernis durcissable par UV et/ou durcissable par faisceau d'électrons (ESH) .

7. Panneau en un matériau dérivé du bois en un matériau composite bois-matière plastique en un mélange de fibres de bois et de fibres de matière plastique, comprenant :
des fibres de bois ayant une longueur de 1,0 mm à 10 mm et une épaisseur de 0,05 à 1 mm, et des fibres de matière plastique,
les fibres de matière plastique étant fonctionnalisées avec au moins un composé organique,
le rapport de mélange entre les fibres de bois et les fibres de matière plastique étant compris entre 70 % en poids de fibres de bois/30 % en poids de fibres de matière plastique et 40 % en poids de fibres de bois/60 % en poids de fibres de matière plastique, et
au moins une couche décorative étant prévue sur au moins un côté du panneau en un matériau dérivé du bois,
ladite au moins une couche décorative comprenant au moins une strate de papier décoratif imprégné avec une résine amino et au moins une strate de papier de recouvrement, la strate de papier décoratif et éventuellement la strate de papier de recouvrement étant compressées avec le panneau en un matériau dérivé du bois.

8. Panneau en un matériau dérivé du bois selon l'une quelconque des revendications précédentes, **caractérisé en ce que** les fibres de matière plastique sont constituées par une matière plastique thermoplastique, notamment choisie dans le groupe contenant le polyéthylène (PE), le polypropylène (PP), les polyesters, tels que le polyéthylène téréphtalate, ou leurs mélanges, notamment de polypropylène (PP) et de polyéthylène (PE).

9. Panneau en un matériau dérivé du bois selon l'une quelconque des revendications précédentes, **caractérisé en ce que** ledit au moins un composé organique comprend au moins un groupe fonctionnel, le groupe fonctionnel étant choisi dans un groupe contenant -CO₂H, -CONH₂,-COO-, notamment l'acide maléique, l'acide phtalique, l'acide succinique, l'acide glutarique, l'acide adipique ou leurs anhydrides, le succinimide.

10. Panneau en un matériau dérivé du bois selon l'une quelconque des revendications précédentes, **caractérisé en ce que** ledit au moins un composé organique est contenu dans les fibres de matière plastique en une quantité comprise entre 0,1 et 5 % en poids, de préférence entre 0,5 et 3 % en poids, de manière notamment préférée entre 1 et 2 % en poids.

11. Panneau en un matériau dérivé du bois selon l'une quelconque des revendications précédentes, **caractérisé en ce qu'**au moins un papier de contrebalance est appliqué sur au moins un côté, de préférence le côté opposé à la couche décorative.

12. Panneau en un matériau dérivé du bois selon l'une quelconque des revendications précédentes, **caractérisé en ce qu'**un profilage pour l'introduction d'un profilé en rainure et/ou ressort dans un bord du panneau en un matériau dérivé du bois est prévu dans une zone de bord du panneau en un matériau dérivé du bois.

13. Panneau en un matériau dérivé du bois selon l'une quelconque des revendications précédentes, **caractérisé par** une épaisseur de panneau comprise entre 2 et 15 mm, de préférence entre 3 et 12 mm, de manière notamment préférée entre 4 et 10 mm, et une masse volumique apparente comprise entre 500 et 1 500 kg/m³, de préférence entre 650 et 1 300 kg/m³, de manière notamment préférée entre 800 et 1 100 kg/m³.

14. Utilisation d'un panneau en un matériau dérivé du bois sous la forme d'un matériau composite bois-matière plastique (WPC) selon l'une quelconque des revendications précédentes pour un sol stratifié.

15. Procédé de fabrication d'un panneau en un matériau dérivé du bois en un matériau composite bois-matière plastique selon l'une quelconque des revendications 1 à 13, comprenant les étapes suivantes :
- l'application d'un mélange de fibres de bois présentant une humidité des fibres de bois comprise entre 6 et 15 %, par rapport au poids total des fibres de bois, et de fibres de matière plastique, les fibres de matière plastique étant fonctionnalisées avec au moins un composé organique, en un rapport de mélange compris entre 70 % en poids de fibres de bois/30 % en poids de fibres de matière plastique et 40 % en poids de fibres de bois/60 % en poids de fibres de matière plastique sur une première bande de transport en formant un précurseur non-tissé et l'introduction du précurseur non-tissé dans au moins un premier four à recuire pour le pré-compactage ;
- le transfert du non-tissé pré-compacté dans au moins une presse à double-bande pour le compactage ultérieur en un panneau de matériau dérivé du bois ; et
- le refroidissement du panneau de matériau dérivé du bois compacté dans au moins une presse de refroidissement à des températures comprises entre 10 et 70 °C.
